# EUROPEAN PATENT SPECIFICATION

(11) **EP 3 248 831 B1**
(45) Date of publication and mention of the grant of the patent: **30.12.2020**
(21) Application number: 16739733.0
(22) Date of filing: 11.01.2016
(51) Int. Cl.: B60N 2/42, B60N 2/68, B60N 2/22

(54) **VEHICLE SEAT WITH ENERGY ABSORPTION STRUCTURE**
FAHRZEUGSITZ MIT ENERGIEABSORBIERENDER STRUKTUR
SIÈGE DE VÉHICULE AVEC STRUCTURE D'ABSORPTION D'ÉNERGIE

(30) Priority: 22.01.2015 CN 201510032544
(43) Date of publication of application: 29.11.2017
(73) Proprietor: Yanfeng Adient Seating Co., Ltd., Kangqiao Industrial Zone Pudong New Area Shanghai 201315 (CN)
(72) Inventor: MENG, Qingbao, Shanghai 201315 (CN); CHEN, Yueyun, Shanghai 201315 (CN); TAO, Huijia, Shanghai 201315 (CN)
(74) Representative: Wagner, Carsten
(86) International application number: PCT/CN2016/070576
(87) International publication number: WO 2016/115986

(56) References cited:
- EP-A1- 2 127 941
- WO-A1-97/29923
- WO-A1-2012/077444
- CN-A- 101 905 664
- DE-A1- 19 807 581
- DE-A1-102015 202 586
- JP-B2- 5 521 160
- KR-A- 20140 068 669
- US-A1- 2015 239 373

## Description

### Technical field

The present invention relates to a vehicle seat, especially to a vehicle seat with an energy absorption structure.

### Related Art

When a vehicle travels, if rear-end collision happens, it is highly possible to cause whiplash injury to the driver and passengers in the vehicle. The "whiplash injury" means the neck of human will present a motion like being whiplashed under the combined action of the impact acceleration and the head inertia force. After the collision, the injured will feel varying degrees of neck discomfort, which is not fatal, but the process of rehabilitation is complex, lengthy, and in some case it is an incurable permanent harm. In order to reduce damage, the vehicle manufacturers have begun to develop a vehicle seat capable of absorbing impact energy. For example, patent application CN103249595A, CN1640714A and US20100096892A1 respectively provide a vehicle seat capable of absorbing impact energy. However, these vehicle seats have complex structure and high cost.

Vehicle seats including energy absorbing structures are known from DE 198 07 581 A1, EP 2 127 941 A1 and WO 97/29923.

KR 10 2014 0068669 A discloses a vehicle seat with the features of the preamble of claim 1.

### Summary of the invention

The problem of the present invention is to provide a vehicle seat with energy absorption structure with excellent energy absorption effect, simple structure and low cost.

This problem is solved by a vehicle seat with the features of claim 1. Furthermore, the cushion side plate and the angle adjuster lower connection plate are connected by a front bolt and a second nut.

Preferably, the outer diameter of the step part is smaller than the inner diameter of the circular groove part so that the lowest point of the step part is spaced from the lowest point of the circular groove part when the step part press-fits with the energy absorption disc.

Preferably, the angle adjuster lower connection plate is a planar structure. Preferably, the angle adjuster lower connection plate includes a cushion mounting surface and an energy absorption disc mounting surface at different horizontal planes, so that the energy absorption disc is flush with the cushion mounting surface after mounting on the energy absorption disc mounting surface.

Furthermore, the cross-sectional area of the impact fracture part is 6-9 mm². Furthermore, the first nut is welded on the cushion side plate.

The vehicle seat of the present invention has simple structure, convenient installation, and can absorb energy during collision so as to reduce the head rebound speed during the vehicle collision and protect passengers, thereby improving vehicle safety level.

### Brief Description of the Drawings

Fig.1 is a structural diagram of a vehicle seat according to the present invention;
Fig. 2 is an exploded view of the energy absorption structure according to the present invention;
Fig.3 is an assembly view of the energy absorption structure according to the present invention;
Fig.4A is a structural diagram of the first embodiment of the energy absorption disc in Fig.2;
Fig.4B is a structural diagram of the second embodiment of the energy absorption disc in Fig.2;
Fig.4C is a structural diagram of the third embodiment of the energy absorption disc in Fig.2;
Fig.4D is a structural diagram of the fourth embodiment of the energy absorption disc in Fig.2;
Fig.5A is a structural diagram of the first embodiment of the angle adjuster lower connection plate in Fig.2;
Fig.5B is a structural diagram of the second embodiment of the angle adjuster lower connection plate in Fig.2;
Fig.6A is a diagram showing the connection between the energy absorption disc in Fig.4A and the angle adjuster lower connection plate in Fig.5B;
Fig. 6B is a cutaway diagram along the A-A line in Fig. 6A;
Fig.7 is a structural diagram of the nut in Fig.2;
Fig.8A is a diagram showing the nut in Fig.7 welded on the cushion side plate;
Fig.8B is a cutaway diagram showing the nut in Fig.7 welded on the cushion side plate;
Fig.9 is a structural diagram of the step bolt in Fig.2;
Fig.10 is a cutaway diagram showing the assembled energy absorption structure according to the present invention;
Fig.11 is a diagram showing breakage of the energy absorption disc after collision according to the present invention;
Fig.12 is a diagram showing collision between the step bolt and the angle adjuster lower connection plate according to the present invention;
Fig.13 is a cutaway diagram showing the energy absorption structure during collision of the present invention;
Fig.14 is a diagram showing the energy absorption disc pressing the straight groove part during collision according to the present invention;
Fig.15 is a diagram showing deformation of the vehicle seat during collision according to the present invention.

### Detailed description of the preferred embodiments

Preferred embodiments of the present invention are given in conjunction with the drawings and described in detail so that the functions and features of the present invention can be better understood.

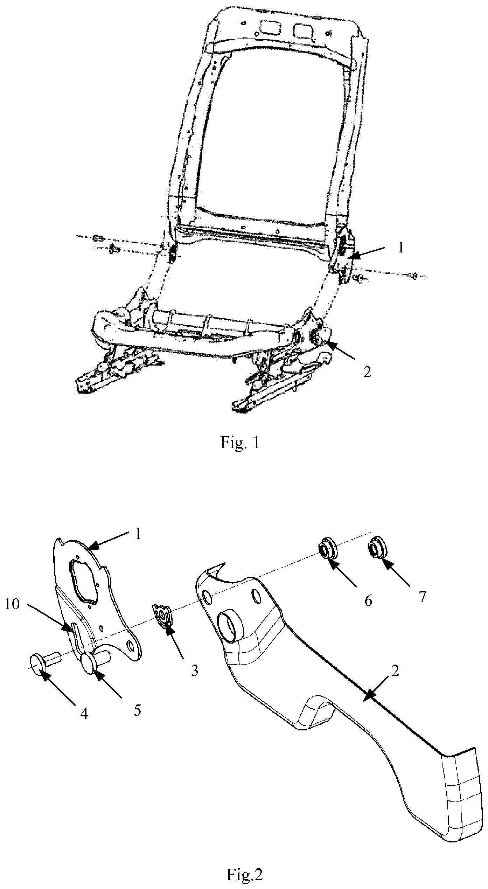

Fig.1 shows a conventional vehicle seat including a cushion assembly and a back chair assembly. The back chair assembly is provided with angle adjuster lower connection plates 1 on two lower sides thereof; the cushion assembly is provided with cushion side plates 2 on two rear sides thereof; and the cushion assembly and the back chair assembly are connected together by the cushion side plates 2 and the angle adjuster lower connection plates 1.

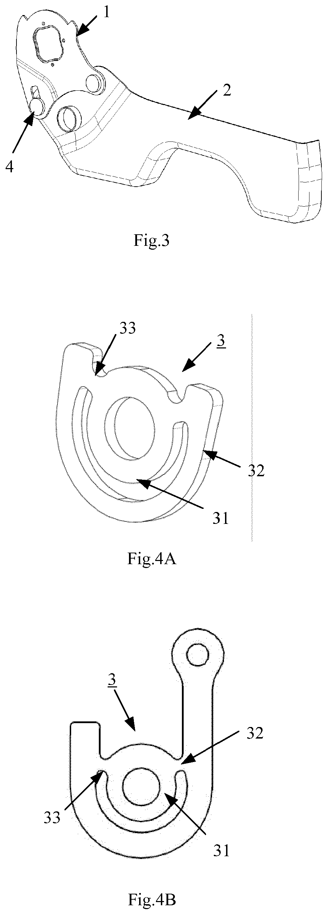

In order to absorb impact energy applied to the back chair assembly during collision, the present invention adds an energy absorption disc 3 between the cushion side plate 2 and the angle adjuster lower connection plate 1 (see Fig.2). The energy absorption discs 3 connect to the cushion side plates 2 and the angle adjuster lower connection plates 1 by a first nut 6 matched to a step bolt 4. Correspondingly, the cushion side plate 2 is provided with a hole through which the first nut 6 passes, and the angle adjuster lower connection plate 1 is provided with an impact groove 10 through which the step bolt 4 passes. The impact groove 10 includes an upper straight groove part and a lower circular groove part. Preferably, in addition to the first nut 6 and the step bolt 4, the cushion side plate 2 and the angle adjuster lower connection plate 1 are further directly connected together by a front bolt 5 and a second nut 7. Fig.3 shows the assembled energy absorption structure.

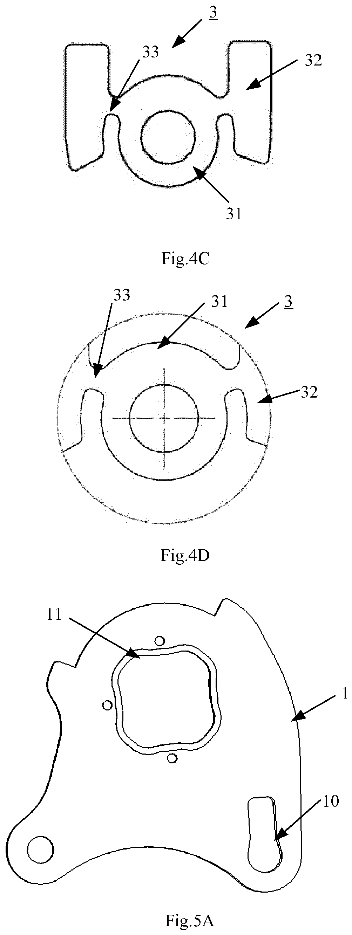

Figs.4A-4D show several varieties of the above energy absorption disc 3. The energy absorption disc 3 each includes an annular part 31, impact fracture parts 33 disposed on two sides of the annular part 31, and a position part 32 connecting to the impact fracture parts 33. In Fig.4A, the position part 32 is shown as U-shaped structure surrounding most of the circumference of the annular part 31. In Fig.4B, the position part 32 is shown as J-shaped structure, wherein the upper end thereof is provided with a hole for inserting a fastener, the lower end surrounds most of the circumference of the annular part 31. In Fig.4C, the position part 32 includes two position sections connecting to the impact fracture parts 33 on two sides of the annular part 31 respectively. In Fig.4D, the position part 32 includes two position sections connecting to the impact fracture parts 33 on two sides of the annular part 31 respectively and a circular frame for connecting said two position sections. Herein, the annular part 31 of the energy absorption disc 3 and the circular groove part on the angle adjuster lower connection plate 1 are disposed coaxially. The hole at the center of the annular part 31 is used for passing through the stud of the staircase bolt 4. The position part 32 contacts with the angle adjuster lower connection plate 1 to locate the energy absorption disc 3 internal to the angle adjuster lower connection plate 1 (opposite to the side of the cushion side plate 2). As shown, the structural deformations of the energy absorption disc 3 are mainly presented on the position part 32. In addition, other appropriate forms other than Figures 4A-4D may also be used. The width of the impact fracture part 33 is significantly less than the diameter of the annular part 31 (the cross-sectional area thereof is 6-9 mm², which can be varied according to the force applied on the vehicle seat energy absorption structure). When the rear-end collision happens and the collision exceeds a certain level, the impact fracture parts 33 will break.

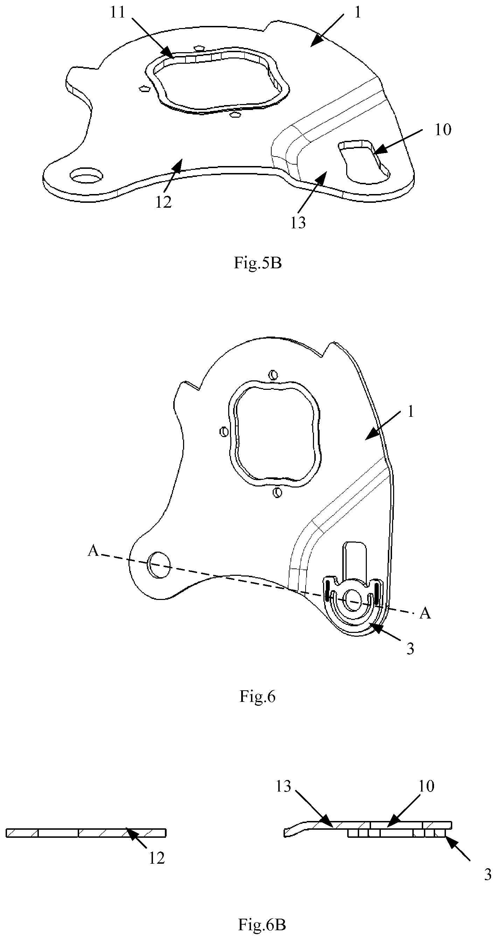

Figs.5A-5B shows two embodiments of the angle adjuster lower connection plate 1. The angle adjuster lower connection plate 1 as shown in Fig.5A is planar, i.e. comprises a plane, on which an impact groove 10, a hole for passing through the stud of the front bolt 5 and a mounting hole 11 for mounting the angle adjustor (not shown) are provided. The angle adjuster lower connection plate 1 in Fig.5B is similar with that in Fig.5A, except that it shapes as a step, i.e. including a cushion mounting surface 12 and an energy absorption disc mounting surface 13 at different planes. Herein, the cushion mounting surface 12 is used for mounting a cushion. Both the above-mentioned hole for passing through the stud of the front bolt 5 and the mounting hole 11 for mounting the angle adjustor (not shown) are disposed on the cushion mounting surface 12. The impact groove 10 is provided on the energy absorption disc mounting surface 13 for mounting the energy absorption disc 3. As shown in Figs.6A-6B, when the energy absorption disc 3 is mounted on the energy absorption disc mounting surface 13, the top surface of the energy absorption disc 3 is coplanar with the top surface of the cushion mounting surface 12 (i.e. the altitude difference between the cushion mounting surface 12 and the energy absorption disc mounting surface 13 corresponds to the thickness of the energy absorption disc 3). In this way, the cushion can be manufactured into a flat shape, rather than a step, in order to reduce the cost for the clamp tools and check tools for manufacturing the cushion and back chair, and facilitate the installation of the cushion and the back chair.

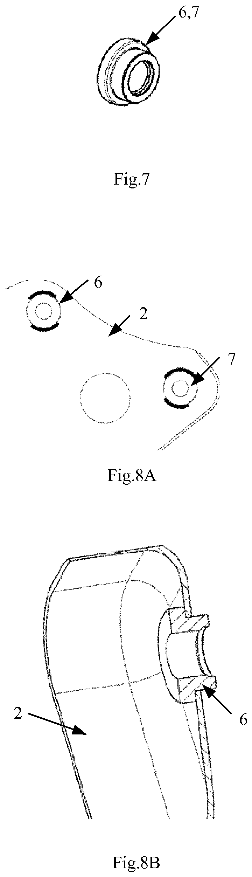

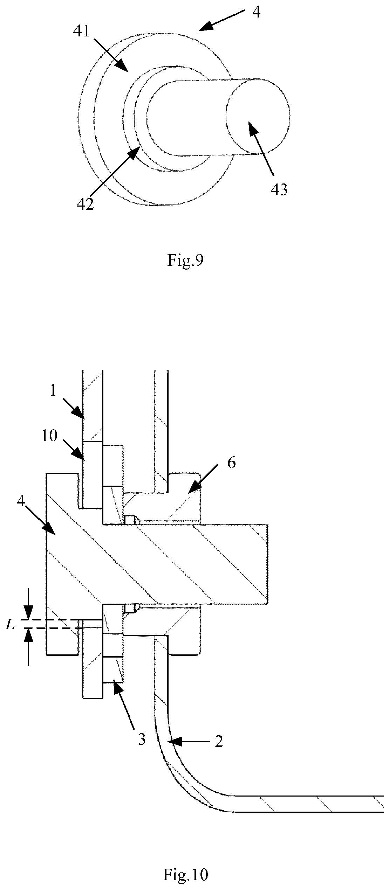

The nuts of the present invention as shown in Fig.7 are conventional nuts in the art. In the embodiments of Figs.8A-8B, the nuts 6, 7 are welded on the cushion side plates 2. Furthermore, the step bolt 4 of the present invention as shown in Fig.9 is a conventional step bolt in the art and includes a head part 41 with a large diameter, a step part 42 with a small diameter and a stud 43, wherein the head part 41, the step part 42 and the stud 43 are coaxially connected in sequence.

The process for assembling the above energy absorption structure includes:
1) As shown in Fig.2, welding the first nut 6, the second nut 7 on the corresponding positions on the cushion side plate 2;
2) As shown in Fig.6A, positioning the energy absorption disc 3 on the angle adjuster lower connection plates 1, and making the annular part 31 of the energy absorption disc 3 coaxial with the circular groove part of the impact groove 10;
3) As shown in Fig.10, passing the step bolt 4 through the cushion side plate 2 and the energy absorption disc 3 and threading it to the first nut 6 welded on the cushion side plate 2 so as to press the energy absorption disc 3 between the step part 42 of the step bolt 4 and the cushion side plate 2. Herein, gap L is formed between the bottom of the step part 42 and the bottom of the impact groove 10. Due to the gap, no friction force and extrusion force will be generated between the step bolt 4 and the angle adjuster lower connection plates 1 because the force generated during the fracture of the energy absorption disc 3 depends on the fracture force of the energy absorption disc 3; and
4) Passing the front bolt 5 through the angle adjuster lower connection plates 1 and connecting it to the cushion side plate 2, then the assembly process ends.

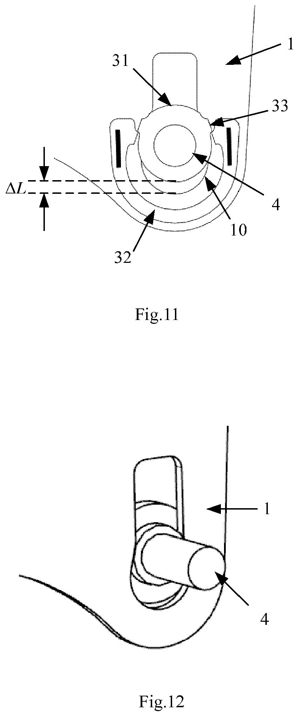

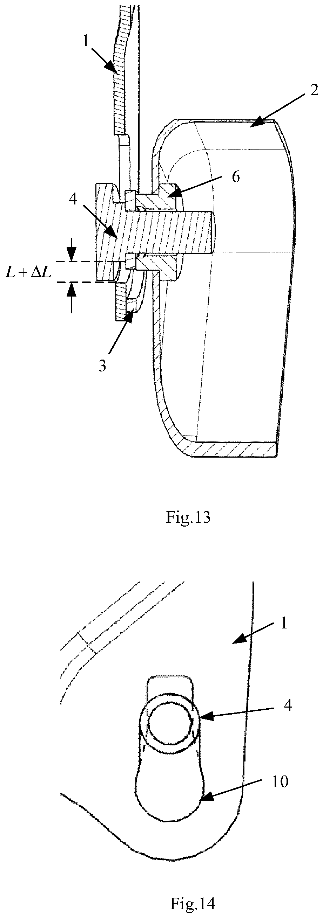

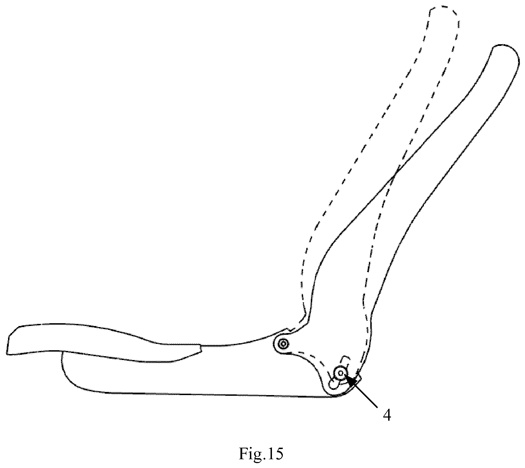

When the rear-end collision happens, the step bolt 4 rotates about the front bolt 5 due to the back chair assembly and shears the energy absorption disc 3 (as shown in Fig.11, the step bolt 4 breaks the impact fracture parts 33 of the energy absorption disc 3), and moves upwardly with the broken annular part 31 (as shown in Fig.12). After the step bolt 4 moves distance Δ*L*, the step part 42 of the step bolt 4 abuts the bottom of the straight groove part of the impact groove 10 (as shown in Fig.13) and then presses the angle adjuster lower connection plate 1 with constant force (as shown in Fig.14, the straight groove part of the lower connection plate is broadened, and the dotted line represents the initial profile of the straight groove part), so as to make the back chair assembly rotating backward about the front bolt 5 to absorb energy (as shown in Fig.15, the dotted line represents initial position of the back chair assembly).

Therefore, the energy absorption structure of the present invention has the advantages of simple structure and convenient installation, and can absorb impact energy during collision. In addition, the present application further has the following advantages:
1. The resulting force is stable and adjustable: based on the material strength, thickness and fracture cross sectional area, the force can be calculated as follows: force F1= allowable tension *σ*1 * cross sectional area S, wherein the allowable tension *σ*1 of the material of the energy absorption disc 3 is constant, thus the force F1 can be adjusted by varying the cross sectional area S of the impact fracture parts 33. The extrusion force F2 on the impact groove 10 of the lower connection plate can be adjusted by changing the interference extrusion amount Ψ between the connection plate 1 and the step bolt 4: extrusion force F2= allowable tension *σ*2* extrusion amount Ψ* coefficient.
2. Good fatigue resistance: the energy absorption disc 3 not only ensures the force produced during the collision failure, but also ensures no fail due to fatigue will happen under normal condition, thus not influencing the function of the seat under the normal condition.
3. Eliminating the effect of the friction force generated by bolt fastening: when the back chair connects with the cushion via a bolt, it is not necessary to account the influence of the sliding friction force generated by the axial force of the fastening bolt during the movement of mechanism. Since the step bolt 4 passes through the circular groove on the lower connection plate and spaced from the bottom of the circular groove, and the step part 42 presses against the energy absorption disc 3, when the energy absorption disc 3 fractures and generates force, the axial force of the step bolt 4 does not influence the fracture of the energy absorption disc 3.

The above discussion merely represents preferred embodiments of the present invention and does not intend to limit the scope of the present invention. The above embodiments of the present invention can also make various variations, as long as they remain within the scope of the appended claims.

## Claims

1. Vehicle seat with an energy absorption structure, including a cushion side plate (2) and an angle adjuster lower connection plate (1), wherein an impact groove (10) is provided on the angle adjuster lower connection plate (1), and the impact groove (10) includes a straight groove part and a circular groove part communicating with each other from top to bottom, the vehicle seat further including an energy absorption disc (3) connected to the angle adjuster lower connection plate (1), a first nut (6) securely coupling to the cushion side plate (2) and a step bolt (4) including a head part, a step part and a stud which are coaxially connected in sequence, **characterized in**
**that** the energy absorption disc (3) includes an annular part (31), a position part (32) and impact fracture parts (33) connected between the annular part (31) and the position part (32), and that the stud passes through the circular groove part, the annular part and threads to the first nut to make the step part passing through the circular groove part and press-fitting with the energy absorption disc (3).

2. The vehicle seat with an energy absorption structure according to claim 1, **characterized in that** the cushion side plate (2) and the angle adjuster lower connection plate (1) are connected by a front bolt (5) and a second nut (7).

3. The vehicle seat with an energy absorption structure according to claim 1, **characterized in that** the outer diameter of the step part is smaller than the inner diameter of the circular groove part so that the lowest point of the step part is spaced from the lowest point of the circular groove part when the step part press-fits with the energy absorption disc (3).

4. The vehicle seat with an energy absorption structure according to claim 1, **characterized in that** the angle adjuster lower connection plate (1) is a planar structure.

5. The vehicle seat with an energy absorption structure according to claim 1, **characterized in that** the angle adjuster lower connection (1) plate includes a cushion mounting surface and an energy absorption disc mounting surface at different planes, so that the energy absorption disc (3) is flush with the cushion mounting surface after mounting on the energy absorption disc mounting surface.

6. The vehicle seat with an energy absorption structure according to claim 1, **characterized in that** the cross-sectional area of the impact fracture part (33) is 6-9 mm².

7. The vehicle seat with an energy absorption structure according to claim 1, **characterized in, that**, the first nut (6) is welded on the cushion side plate (2).

## Patentansprüche

1. Fahrzeugsitz,
mit einer Energieabsorptionsstruktur, die eine Polsterungsseitenplatte (2) und eine untere Winkeleinstellungs-Verbindungsplatte (1) aufweist,
wobei in der unteren Winkeleinstellungs-Verbindungsplatte (1) eine Aufprallnut (10) vorgesehen ist und die Aufprallnut einen geraden Nutteil und einen kreisförmigen Nutteil aufweist, die von oben nach unten miteinander kommunizieren,
wobei der Fahrzeugsitz ferner aufweist
eine Energieabsorptionsscheibe (3), die mit der unteren Winkeleinstellungs-Verbindungsplatte (1) verbunden ist, eine erste Mutter (6), die fest mit dem Polsterungsseitenplatte (2) verbunden ist, und
eine Stufenschraube (4), die ein Kopfteil, ein Stufenteil und einen Bolzen aufweist, die koaxial hintereinander verbunden sind,
**dadurch gekennzeichnet,**
**dass** die Energieabsorptionsscheibe (3) ein ringförmiges Teil (31), ein Positionsteil (32) und Aufprallbruchteile (33) aufweist, die das ringförmige Teil (31) und des Positionsteil (32) miteinander verbinden und
**dass** sich der Bolzen durch das kreisförmige Nutteil und das ringförmige Teil erstreckt und in die erste Mutter eingeschraubt ist, derart, dass der Stufenteil sich durch das ringförmige Nutteil erstreckt und mit der Energieabsorptionsscheibe (3) pressverbunden ist.

2. Fahrzeugsitz mit einer Energieabsorptionsstruktur nach Anspruch 1, **dadurch gekennzeichnet, dass** die Polsterungsseitenplatte (2) und die untere Winkeleinstellungs-Verbindungsplatte (1) durch eine Frontschraube (5) und eine zweite Mutter (7) miteinander verbunden sind.

3. Fahrzeugsitz mit einer Energieabsorptionsstruktur nach Anspruch 1, **dadurch gekennzeichnet, dass** der Außendurchmesser des Stufenteils kleiner ist als der Innendurchmesser des ringförmigen Nutteils, sodass der niedrigste Punkt des Stufenteiles zu dem niedrigsten Punkt des ringförmigen Teils beabstandet ist, wenn das Stufenteil mit der Energieabsorptionsscheibe (3) pressverbunden ist.

4. Fahrzeugsitz mit einer Energieabsorptionsstruktur nach Anspruch 1, **dadurch gekennzeichnet, dass** die untere Winkeleinstellungs-Verbindungsplatte (1) eine planare Struktur ist.

5. Fahrzeugsitz mit einer Energieabsorptionsstruktur nach Anspruch 1, **dadurch gekennzeichnet, dass** die untere Winkeleinstellungs-Verbindungsplatte (1) eine Polsterungs-Montagefläche und eine Energieabsorptionsscheiben-Montagefläche in unterschiedlichen Ebenen aufweist, derart, dass die Energieabsorptionsscheibe (3) nach Montage an der Energieabsorptionsscheiben-Montagefläche bündig mit der Polsterungs-Montagefläche ist.

6. Fahrzeugsitz mit einer Energieabsorptionsstruktur nach Anspruch 1, **dadurch gekennzeichnet, dass** der Querschnittsbereich des Aufprallbruchteil (33) 6 bis 9 mm² ist.

7. Fahrzeugsitz mit einer Energieabsorptionsstruktur nach Anspruch 1, **dadurch gekennzeichnet, dass** die erste Mutter (6) mit der Polsterungsseitenplatte (2) verschweißt ist.

## Revendications

1. Siège de véhicule avec une structure d'absorption d'énergie,
comprenant une plaque latérale de coussin (2) et une plaque de raccordement inférieure d'ajusteur d'angle (1),
dans lequel une rainure d'impact (10) est prévue sur la plaque de raccordement inférieure d'ajusteur d'angle (1), et la rainure d'impact (10) comprend une partie de rainure droite et une partie de rainure circulaire communiquant entre elles de haut en bas, le siège de véhicule comprenant en outre un disque d'absorption d'énergie (3) raccordé à la plaque de raccordement inférieure d'ajusteur d'angle (1), un premier écrou (6) se couplant de manière fixe à la plaque latérale de coussin (2) et un boulon à gradin (4) comprenant une partie de tête, une partie de gradin et un goujon qui sont raccordés de manière coaxiale en séquence,
**caractérisé en ce que** le disque d'absorption d'énergie (3) comprend une partie annulaire (31), une partie de positionnement (32) et des parties de fracture d'impact (33) raccordées entre la partie annulaire (31) et la partie de positionnement (32), et
**en ce que** le goujon passe par la partie de rainure circulaire, la partie annulaire et les filetages jusqu'au premier écrou pour que la partie à gradin passe par la partie de rainure circulaire et soit ajustée avec serrage avec le disque d'absorption d'énergie (3).

2. Siège de véhicule avec une structure d'absorption d'énergie selon la revendication 1, **caractérisé en ce que** la plaque latérale de coussin (2) et la plaque de raccordement inférieure d'ajusteur d'angle (1) sont raccordées par un boulon avant (5) et un second écrou (7).

3. Siège de véhicule avec une structure d'absorption d'énergie selon la revendication 1, **caractérisé en ce que** le diamètre externe de la partie de gradin est inférieur au diamètre interne de la partie de rainure circulaire de sorte que le point le plus bas de la partie de gradin est espacé du point le plus bas de la partie de rainure circulaire lorsque la partie de gradin s'ajuste avec serrage avec le disque d'absorption d'énergie (3).

4. Siège de véhicule avec une structure d'absorption d'énergie selon la revendication 1, **caractérisé en ce que** la plaque de raccordement inférieure d'ajusteur d'angle (1) est une structure planaire.

5. Siège de véhicule avec une structure d'absorption d'énergie selon la revendication 1, **caractérisé en ce que** la plaque de raccordement inférieure d'ajusteur d'angle (1) comprend une surface de montage de coussin et une surface de montage de disque d'absorption d'énergie à des plans différents, de sorte que le disque d'absorption d'énergie (3) est de niveau avec la surface de montage de coussin après le montage sur la surface de montage de disque d'absorption d'énergie.

6. Siège de véhicule avec une structure d'absorption d'énergie selon la revendication 1, **caractérisé en ce que** la surface transversale de la partie de fracture d'impact (33) est de 6 - 9 mm².

7. Siège de véhicule avec une structure d'absorption d'énergie selon la revendication 1, **caractérisé en ce que** le premier écrou (6) est soudé sur la plaque latérale de coussin (2).
